# EUROPEAN PATENT APPLICATION

(11) **EP 2 371 582 A1**
(43) Date of publication of application: **05.10.2011**
(21) Application number: 09825913.8
(22) Date of filing: 12.11.2009
(51) Int. Cl.: B60C 11/11, B60C 11/04

(54) **PNEUMATIC TIRE**

(30) Priority: 14.11.2008 JP 2008292186
(71) Applicant: Bridgestone Corporation, Tokyo 104-8340 (JP)
(72) Inventor: MATSUZAWA, Kazutaka, Kodaira-shi Tokyo 187-8531 (JP)
(74) Representative: Oxley, Robin John George
(86) International application number: PCT/JP2009/006034
(87) International publication number: WO 2010/055659

(57) **Abstract**

The present invention is directed to provide a pneumatic tire capable of effectively preventing large collision noise due to simultaneous collision of plural blocks of respective rows with a road surface. Six rows 9, 10, 13 of blocks on a tread surface 1 are defined by five circumferential grooves 2, 3, 4 continuously extending in a tread circumferential direction in a zigzag manner, a plurality of lateral grooves 5, 6, 11 extending in a tread widthwise direction between the circumferential grooves adjacent to each other and between the outermost circumferential grooves 4 and respective tread side edges e. Five circumferential grooves 2, 3, 4 comprise narrow circumferential grooves 2, 4 and a pair of wide circumferential grooves 3 disposed on each side of the tire equator line and having a width greater than that of the narrow circumferential grooves 2, 4. The lateral grooves 5, 6 are inclined with respect to the tread widthwise direction. Each of the blocks 7, 8, 12 of the block rows 9, 10, 13 has a polygon planar contour shape with six or more sides such that a minimum length of the block in the tread widthwise direction is situated in an end portion of the block in the tread circumferential direction and a middle portion of the block in the tread circumferential direction has a length greater than the length of the end portion in the tread circumferential direction. Leading edges 7a, 8a, 12a of the blocks 7, 8, 12 of each rows 9, 10, 13 when the tire is rolling under load are spaced from each other in the tread circumferential direction.

## Description

### TECHNICAL FIELD

The present invention relates to a pneumatic tire and particularly to a technique to reduce noise generated due to collision of blocks defined on a tread surface with a road surface

### RELATED ART

For a conventional pneumatic tire, for example, having a block pattern, one of tire noise is collision noise caused when a leading edge of a block collides with a road surface when the tire is rolling under load. Conventionally, pitch variation is widely adopted in order to change such collision noise and the like to white noise.
However, even in this case, when the same pitch variation is adopted to the entire width of the tread surface, blocks are symmetrically arranged with respect to a tire equator line and the leading edges of several blocks collide with a road surface simultaneously when the tire is rolling under load, which results in increase of collision noise of the blocks with a road surface.

### DISCLOSURE OF THE INVENTION

### PROBLEMS TO BE SOLVED BY THE INVENTION

Therefore, the present invention provides a pneumatic tire capable of effectively preventing large collision noise due to simultaneous collision of plural blocks of respective rows with a road surface.

### MEANS FOR SOLVING THE PROBLEM

A pneumatic tire of the present invention comprises plural rows of blocks on a tread surface defined by a plurality of circumferential grooves continuously extending in a tread circumferential direction in a zigzag manner, a plurality of lateral grooves extending in a tread widthwise direction, in other words, with a longer extending length in the tread widthwise direction than an extending length in the tread circumferential direction, between the circumferential grooves adjacent to each other and between the outermost circumferential grooves and respective tread side edges, the plurality of circumferential grooves comprising a narrow circumferential groove and a pair of wide circumferential grooves disposed on each side of the tire equator line and having a width greater than that of the narrow circumferential groove, wherein the lateral grooves are inclined with respect to the tread widthwise direction, each of the blocks has a polygon planar contour shape with six or more sides such that a minimum length of the block in the tread widthwise direction is situated in an end portion of the block in the tread circumferential direction and a middle portion of the block in the tread circumferential direction has a length greater than the length of the end portion in the tread circumferential direction and leading edges of the blocks of each rows when the tire is rolling under load, generally in a normal rotation direction, are spaced from each other in the tread circumferential direction.
In addition, each side portion of the polygon planar contour shape may include a side having a convex curve and/or a side having a concave curve in the outer direction.

Thus, in this tire, as to the blocks of the respective block rows, only one leading edge will collide with a road surface when the tire is rolling under load in a predetermined order.

The term "tread surface" as used herein means a contact surface with a flat plate when a tire is mounted to an applicable rim, inflated with a defined air pressure, placed vertically on the flat plate in a resting state and applied with load corresponding to a defined mass.
The term "applicable rim" as used herein means a rim which is defined by the following standard in accordance with the size of a tire, the term "defined air pressure" means an air pressure which is defined corresponding to the maximum loading capability in the following standard, and the maximum loading capability means the maximum mass which is allowed to be applied to a tire in the following standard. The term "defined mass" as used herein means the above described maximum loading capability.
The air as used herein may be substituted with an inert gas such as nitrogen gas or other.

The standard means an industry standard effective in the region where the tire is manufactured or used, and is, for example, the "YEAR BOOK" published by "THE TIRE AND RIM ASSOCIATION INC." in the United States of America, the "STANDARDS MANUAL" published by "THE European Tyre and Rim Technical Organisation" in Europe, and the "JATMA YEAR BOOK" published by Japan Automobile Tires Manufactures Association in Japan.

In such a tire, it is preferable that the pair of wide circumferential grooves have substantially opposite relative phases when an odd number of the block rows are defined between the pair of wide circumferential grooves, and the pair of wide circumferential grooves have a substantially same relative phase when an even number of the block rows are defined between the pair of wide circumferential grooves.

It is preferable that a groove center of each of the lateral grooves has an inclination angle of 5 degrees to 30 degrees with respect to the tread widthwise direction.
The inclination angle is specified assuming that the lateral groove has a constant width over its entire length in order to reduce collision noise of the block leading edge with a road surface without degradation of uneven wear resistance. If the lateral groove is formed in such a manner that the groove width is increased from one end of the lateral groove to the other in order to effectively achieve reduction of collision noise with a road surface and suppression of uneven wear of the block trailing portion, the inclination angle of the lateral groove may be set outside of the above-mentioned range.

It is preferable that the tread pattern comprising each of the blocks is a directional pattern and that the leading edge of each of the blocks extends in a direction intersecting with a leading-side contour line of a footprint when the tire is rolling under load.

### EFFECT OF THE INVENTION

In the pneumatic tire of this invention, it is possible to reduce collision noise of blocks with a road surface in comparison to that of conventional tire by spacing the leading edges of the blocks of each rows when the tire is rolling under load from each other in the tread circumferential direction since the leading edge of the block of each block row collides with a road surface one by one with the timing being delayed with each other and a plurality of block leading edges do not collide with a road surface simultaneously.

This is further effective when each lateral groove is inclined with respect to the tread widthwise direction and the corner portion to be the leading-side end portion of each block collides with a road surface as a dot, which is much shorter than a line.

In addition, it is possible to enhance block stiffness and effectively improve wear resistance by making each of the blocks have a polygon planar contour shape with six or more sides such that a minimum length of the block in the tread widthwise direction is situated in leading-side and/or trailing-side end portion of the block in the tread circumferential direction and a middle portion of the block in the tread circumferential direction has a length greater than the length of the end portion in the tread circumferential direction and by further increasing the width of the middle portion and the like in the tread circumferential direction.

When each of the blocks has, for example, a hexagon planar contour shape with each side being a convex curve and/or a concave curve, as described in JP2007-145209 and Japanese Patent Application No.2007-140896 previously filed by the applicant, it is possible to reduce uneven sliding of the blocks in the tread width and circumferential directions, improve uneven wear resistance and improve wear resistance. When a groove center of each of the lateral grooves has an inclination angle of 5 degrees to 30 degrees with respect to the tread widthwise direction, as to each block defined by the lateral grooves having a constant width over their entire length, heel and toe uneven wear can be advantageously suppressed caused by local sliding of the block trailing-side portion with respect to a road surface and hammering noise caused by collision of the block leading edge with a road surface can be effectively prevented by reducing the length of the leading edge colliding with a road surface simultaneously.

In other words, in case when the inclination angle of the lateral groove is less than 5 degrees, effective reduction of collision noise of the block leading edge with a road surface is difficult to be achieved. In case when the inclination angle is more than 30 degrees, local and early wear of the block trailing-side portion cannot be prevented.

The above-mentioned effect is further achieved when the tread pattern comprising the blocks is a directional pattern and when a normal rotation direction of the tire, in turn the leading-side portion and trailing-side potion of each block are specified.

Collision noise of the block leading edges with a road surface can be more effectively reduced when the leading edge of each of the blocks extends in a direction intersecting with a leading-side contour line of a footprint when the tire is rolling under load and the length of the leading edges of each block colliding with a road surface simultaneously is sufficiently shortened.

In this tire, if the pair of wide circumferential grooves have substantially opposite relative phases when an odd number of the block rows are defined between the pair of wide circumferential grooves, and the pair of wide circumferential grooves have a substantially same relative phase when an even number of the block rows are defined between the pair of wide circumferential grooves, adjacent blocks between the pair of circumferential grooves can be formed with being displaced by 1/2 of the block length in the circumferential direction and the blocks support with each other to advantageously improve wear resistance and uneven wear resistance.

### BRIEF DESCRIPTION OF THE DRAWINGS

FIG. 1 is a partial development plan view of a tread pattern showing an embodiment of the present invention.
FIG. 2 is a similar view to FIG. 1 showing another kind of tread pattern.
FIG. 3 is a similar view to FIG. 1 showing another embodiment.
FIG. 4 is a similar view to FIG. 1 showing a tread pattern of a conventional tire.

### BEST MODE FOR CARRYING OUT THE INVENTION

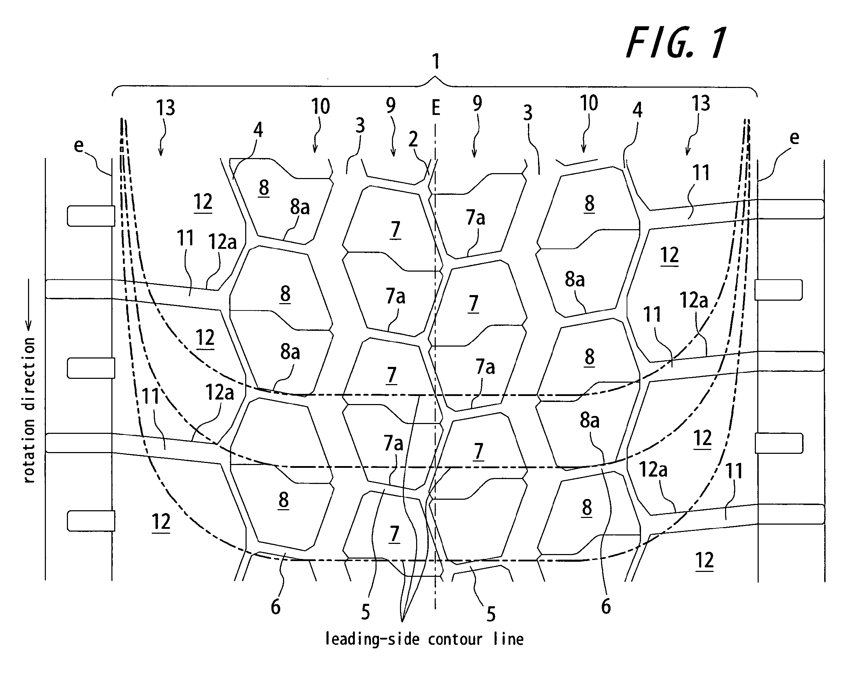

FIG. 1 is a partial development plan view of a directional tread pattern showing an embodiment of the present invention.
In addition, internal reinforcement structures inside of a tire and the like is not illustrated since they are similar to those of a general pneumatic radial tire for heavy load such as a truck and a bus.

On a tread surface 1, five circumferential grooves 2, 3, 4 continuously extending in the tread circumferential direction in a zigzag manner are formed. A center circumferential groove 2 extending with intersecting with a tire equator line E and shoulder circumferential grooves 4 formed in the widthwise outermost side of the tread surface 1 have narrower groove widths than those of intermediate circumferential grooves 3 extending between the center circumferential groove 2 and the shoulder circumferential grooves 4. Lateral grooves 5, 6 having an extending component in the tread widthwise direction larger than an extending component in the tread circumferential direction and having the both ends opened to each of the circumferential grooves 2, 3, 4 adjacent in the tread widthwise direction are formed in a narrowed portion of a land portion between each of the circumferential grooves 2, 3, 4 with a predetermined space in the tread circumferential direction. Four block rows 9, 10 consisting of blocks 7, 8 having a substantially hexagon planar contour shape are formed between five circumferential grooves 2, 3, 4.

A plurality of lateral grooves 11 having a wider width than that of the lateral grooves 5, 6 and having the both ends opened to the shoulder circumferential groove 4 and a tread side edge e are formed in a narrowed portion of a land portion between the shoulder circumferential groove 4 and the tread side edge e. Shoulder block rows 13 consisting of blocks 12 having a pentagonal shape of a planar contour shape like a home base are formed.

The illustrated block pattern configured in this way is a directional pattern in which the rotation direction is specified to the lower direction of the figure by linearly extending each of the lateral groove 5, 6, 11 in such a manner that for example, a portion of the lateral groove in the tire equator line E side is positioned in the lower side of the figure.
It is possible to advantageously reduce noise according to this directional pattern since one portion of the leading edges 7a 8a, 12a of the respective blocks 7, 8, 12 abuts with a road surface in most cases when the tire is rolling under load in comparison to a case when the leading edges 7a, 8a, 12a simultaneously abut with a road surface over their entire lengths.

According the illustrated formation embodiment of the zigzag-shaped circumferential main grooves 2, 3, 4 and the lateral grooves 5, 6, 11, block edges to be the leading edges 7a, 8a, 12a of the blocks of each rows 9, 10, 13 when the tire is rolling under load are spaced from each other in the tread circumferential direction. Therefore, it is also possible to effectively reduce noise since the block leading edges 7a, 8a, 12a of the respective block rows 9, 10, 13 collide with a road surface one by one in a predetermined order when the tire is rolling under load in comparison to a case when a plurality of leading edges of the blocks 7, 8, 12 collide with a road surface simultaneously.

When the tread pattern is configured as a directional pattern by forming each lateral groove 5, 6, 11 inclined preferably at an angle of 5 degrees to 30 degrees, more preferably at an angle of 10 degrees to 20 degrees with respect to the tread widthwise direction as mentioned above, the corner portion to be the leading-side end portion of each block 7, 8, 12 can collide with a road surface as a dot, which is much shorter than a line when the tire is rolling so that noise can be further reduced.

In case when the inclination angle of the lateral groove is less than 5 degrees, collision noise of the leading edges 7a, 8a, 12a with a road surface cannot be reduced to an effective degree. On the other hand, in case when the inclination angle is more than 30 degrees, the block trailing-side portions opposed to the block leading edges 7a, 8a, 12a across the lateral grooves 5, 6, 11 slide with respect to a road surface, which inevitably causes heal and toe uneven wear.

When each of the blocks has a polygon planar contour shape such that a minimum length of the block in the tread widthwise direction is situated in a leading-side end portion and/or a trailing-side end portion in the tread circumferential direction, preferably in the leading-side end portion and a middle portion and the like of the block in the tread circumferential direction has a greater length, noise can be suppressed because the block leading edges 7a, 8a, 12a having the minimum length in the tread widthwise direction collide with a road surface and wear resistance can be effectively improved due to stiffness increase of the polygon blocks 7, 8, 12.

When each block, especially the blocks 7, 8 of the block rows 9, 10 between the shoulder circumferential grooves 4, 4 have a hexagon planar contour shape, it is possible to reduce uneven sliding of the blocks 7, 8 in the tread width and circumferential directions, improve uneven wear resistance of the blocks 7, 8 and improve wear resistance.

When the leading edges 7a, 8a, 12a of each of the blocks 7, 8, 12 extend in a direction intersecting with a leading-side contour line of a footprint as illustrated when the tire is rolling under load, the length of the leading edges 7a, 8a, 12a colliding with a road surface simultaneously is sufficiently shortened so that collision noise with a road surface can be effectively suppressed.

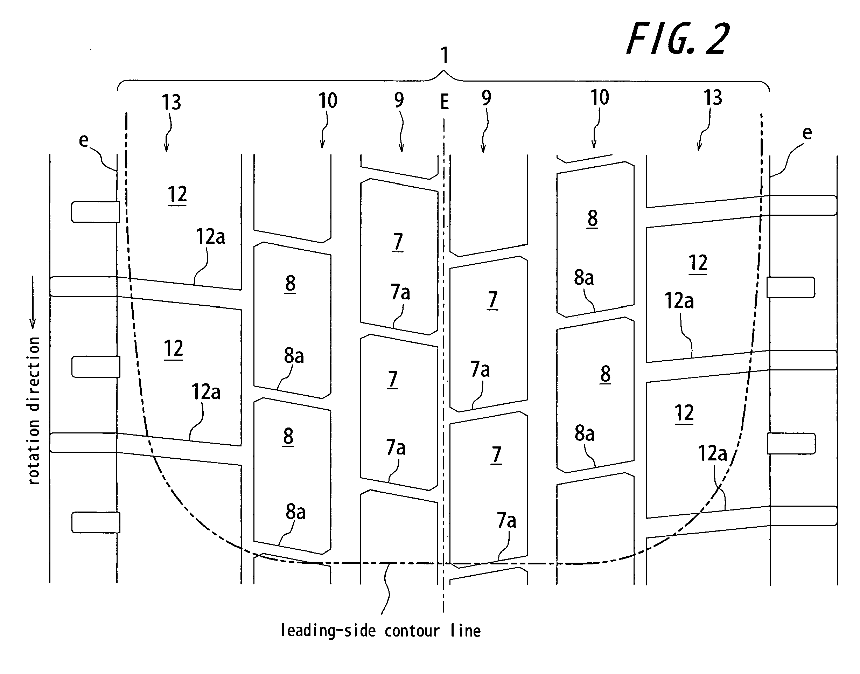

FIG. 2 is a development plan view similar to FIG. 1, showing another kind of tread pattern which is different from the tread pattern shown in FIG. 1 in that each block has a substantially quadrangular shape and both of the wide and narrow circumferential grooves extend linearly.

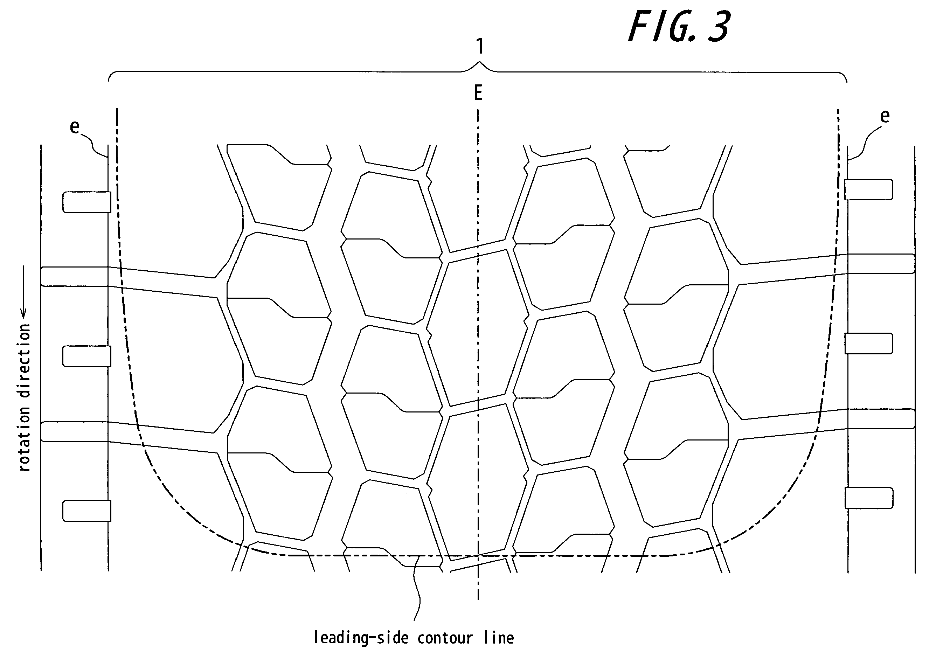

FIG. 3 is a view showing another embodiment which is different from the tread pattern shown in FIG. 1 in that seven rows of blocks are formed in total by defining three rows of blocks between two wide circumferential grooves.

### EXAMPLE

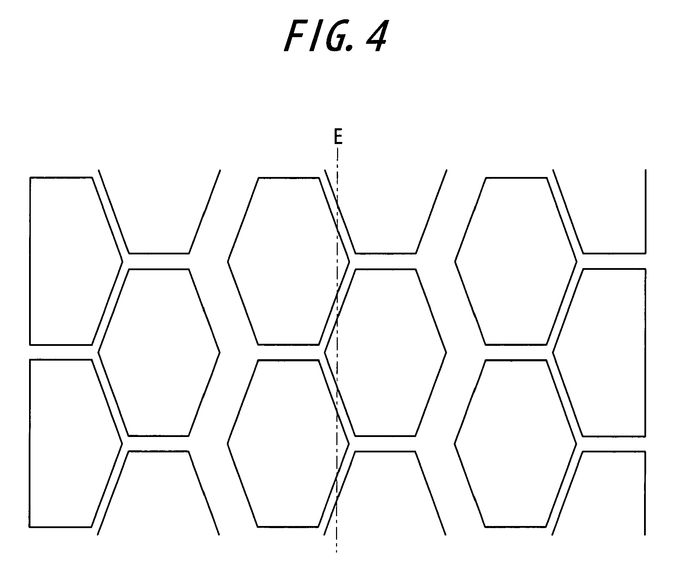

Conventional tire, Comparative Example tires and Example tires having a size of 315/80R22.5 are prepared and each tire is mounted to a rim of 9.00x22.5, inflated with an air pressure of 650kPa, applied with load of 2800kgf and evaluated for a vehicle pass-by noise examination under a condition (LI = 156 condition) based on European noise regulation.
LI (load index) = 156 condition as used herein means a condition of category C3 (mainly TBR) of TRANS/WP.29/2002/7 18 December, 2001 additional clause 3 by the united regulation of the tire authorization concerning tire noise of The United Nations and Economic Commission for Europe (ECE).
The results and the specifications of the tires are shown in Table 1.
Conventional tire has a tread pattern shown in FIG. 4 and both of Comparative Example tires and Example tires have a tread pattern shown in FIG. 1 as a basic pattern.

The tire inflated with an air pressure of 850kPa is attached to a drive shaft of a tractor, to which a trailer vehicle with a constant load is coupled and travelling for 50,000km on a highway. Then the heel and toe (H&T) wear amount in Table 1 is obtained by measuring amount of wear difference of a block having the largest wear difference among rows of blocks having the largest uneven wear and the wear amount index is obtained by indexing average wear amount of the blocks of all rows after the above-mentioned travelling. It is noted that the smaller index value means the smaller wear amount.

**[Table 1]**

| | Conventional tire | Comparative Example tire 1 | Comparative Example tire 2 | Example tire 1 | Example tire 2 | Example tire 3 |
|---|---|---|---|---|---|---|
| Inclination angle of lateral groove [°] | 0 | 5 | 5 | 15 | 30 | 40 |
| Number of overlapped lateral grooves in tread width direction | 3 | 3 | 2 | 1 | 1 | 1 |
| Noise [dB] | 78 | 77 | 76 | 74 | 73 | 72.5 |
| H&T amount [mm] | 0.5 | 0.6 | 0.6 | 0.7 | 1.0 | 1.5 |
| Wear amount index | 100 | 99 | 99 | 96 | 90 | 80 |

It is found from Table 1 that as the increase of the inclination angle of the lateral grooves (5, 6, 11) with respect to the tread widthwise direction, the road surface collision noise due to the leading edges (7a, 8a, 12a) of the blocks (7, 8, 12) is reduced while local wear amount of the trailing-side portions of the blocks (7, 8, 12) is increased.

### DESCRIPTION OF REFERENCE NUMERALS

- 1: tread surface
- 2, 3, 4: circumferential groove
- 5, 6, 11: lateral groove
- 7, 8, 12: block
- 7a, 8a, 12a: leading edge
- 9, 10, 13: row of block
- E: tire equator line
- e: tread side edge

## Claims

1. A pneumatic tire comprising plural rows of blocks on a tread surface defined by a plurality of circumferential grooves continuously extending in a tread circumferential direction in a zigzag manner, a plurality of lateral grooves extending in a tread widthwise direction between the circumferential grooves adjacent to each other and between the outermost circumferential grooves and respective tread side edges, the plurality of circumferential grooves comprising a narrow circumferential groove and a pair of wide circumferential grooves disposed on each side of the tire equator line and having a width greater than that of the narrow circumferential groove, wherein
the lateral grooves are inclined with respect to the tread widthwise direction, each of the blocks has a polygon planar contour shape with six or more sides such that a minimum length of the block in the tread widthwise direction is situated in an end portion of the block in the tread circumferential direction and a middle portion of the block in the tread circumferential direction has a length greater than the length of the end portion in the tread circumferential direction and
leading edges of the blocks of each rows when the tire is rolling under load are spaced from each other in the tread circumferential direction.

2. The pneumatic tire according to claim 1, wherein
the pair of wide circumferential grooves have substantially opposite relative phases when an odd number of the block rows are defined between the pair of wide circumferential grooves, and
the pair of wide circumferential grooves have a substantially same relative phase when an even number of the block rows are defined between the pair of wide circumferential grooves.

3. The pneumatic tire according to claim 1 or 2, wherein
a groove center of each of the lateral grooves has an inclination angle of 5 degrees to 30 degrees with respect to the tread widthwise direction.

4. The pneumatic tire according to any one of claims 1 to 3, wherein
a tread pattern comprising each of the blocks is a directional pattern.

5. The pneumatic tire according to any one of claims 1 to 4, wherein
the leading edge of each of the blocks extends in a direction intersecting with a leading-side contour line of a footprint when the tire is rolling under load.
